# FASCICULE DE BREVET EUROPEEN

(11) **EP 1 868 850 B1**
(45) Date de publication et mention de la délivrance du brevet: **06.08.2008**
(21) Numéro de dépôt: 06743629.5
(22) Date de dépôt: 30.03.2006
(51) Int. Cl.: B60R 19/44

(54) **ASSEMBLAGE D'ELEMENTS DE CARROSSERIE DE VEHICULE AUTOMOBILE ET PROCEDE DE MONTAGE DE CET ASSEMBLAGE SUR LE VEHICULE AUTOMOBILE**
ANORDNUNG VON KAROSSERIEELEMENTEN EINES KRAFTFAHRZEUGS UND VERFAHREN ZUR MONTAGE DIESER KAROSSERIEELEMENTE IN EINEM KRAFTFAHRZEUG
ASSEMBLY OF MOTOR VEHICLE BODY ELEMENTS AND METHOD FOR MOUNTING SAID ASSEMBLY ON THE MOTOR VEHICLE

(30) Priorité: 30.03.2005 FR 0503091
(43) Date de publication de la demande: 26.12.2007
(73) Titulaire: Compagnie Plastic Omnium, 69007 Lyon (FR)
(72) Inventeur: FILLON, Jérôme, F-69003 Lyon (FR); ANDRE, Gérald, F-01500 Ambérieu en Bugey (FR)
(74) Mandataire: Remy, Vincent Noel Paul
(86) Numéro de dépôt international: PCT/FR2006/000698
(87) Numéro de publication internationale: WO 2006/103355

(56) Documents cités:
- EP-A- 0 138 233
- EP-A- 1 475 296
- DE-A1- 2 844 383
- GB-A- 1 218 911
- PATENT ABSTRACTS OF JAPAN vol. 009, no. 117 (M-381), 22 mai 1985 (1985-05-22) -& JP 60 004443 A (NISSAN JIDOSHA KK), 10 janvier 1985 (1985-01-10)

## Description

### Domaine technique

La mise en référence d'un assemblage d'éléments de carrosserie, tel qu'une peau de pare-chocs, par rapport à une pièce de carrosserie, telle qu'un capot avant de véhicule automobile, le bord de raccordement entre l'assemblage et la pièce de carrosserie étant de forme courbe.

Dans un cas particulier, l'invention permet la mise en référence d'un assemblage d'éléments de carrosserie par rapport à trois bords de raccordement avec des pièces de carrosserie, l'un des bords de raccordement étant de forme courbe.

### Etat de la technique

On connaît déjà, dans l'état de la technique, une peau de pare-chocs destinée à jouxter un capot avant de véhicule automobile, présentant un bord de raccordement de forme courbe. La peau de pare-chocs est conformée à l'avance en fonction de la forme courbe prévue du bord de raccordement, mais elle n'est mise en référence de manière satisfaisante que par rapport aux ailes du véhicule automobile.

Le document DE 28 44 383 A1, décrit un assemblage d'éléments de carrosserie de véhicule automobile qui comporte au moins on premier élément de carrosserie et un second élément de carrosserie.

### Problème posé par cet état de la technique

La courbure de la peau de pare-chocs, une fois fixée sur le véhicule automobile, correspond rarement exactement à la forme du bord de raccordement du capot, notamment du fait qu'elle dépend de la largeur entre les ailes du véhicule automobile, qui n'est pas constante d'un véhicule à l'autre.

### Solution proposée par l'invention

L'invention vise à faciliter la mise en référence de l'assemblage avec la pièce de carrosserie, en fournissant un assemblage d'éléments de carrosserie de véhicule automobile, destiné à jouxter une pièce de carrosserie présentant un bord de raccordement, de forme courbe, avec ledit assemblage, qui comporte au moins un premier élément de carrosserie portant un premier organe de glissière, et un second élément de carrosserie portant un second organe de glissière coopérant avec le premier organe de glissière de manière que les premier et second éléments de carrosserie sont susceptibles de coulisser l'un par rapport à l'autre en s'adaptant à la forme courbe du bord de raccordement de la pièce de carrosserie.

Ainsi, grâce à l'invention, il est possible d'adapter, de manière simple, l'assemblage à la forme courbe du bord de raccordement, en faisant coulisser les éléments de carrosserie les uns par rapport aux autres jusqu'à obtenir la forme générale désirée.

### Modes de réalisation particuliers avantageux

- l'assemblage comporte des moyens de verrouillage des éléments de carrosserie entre eux, destinés à s'opposer, lorsqu'ils sont activés, au coulissement de ces éléments de carrosserie les uns par rapport aux autres. Les éléments de carrosserie sont ainsi maintenus en position. Par ailleurs, ces moyens de verrouillage permettent également d'empêcher les vibrations et les déplacements des éléments de carrosserie les uns par rapport aux autres dus aux chocs ou à un ensoleillement ;
- l'assemblage s'étend entre des première et seconde extrémités latérales destinées chacune à être agencée à proximité d'une aile respective du véhicule automobile ;
- chaque extrémité latérale de l'assemblage comporte des moyens de mise en référence par rapport à l'aile correspondante du véhicule automobile ;
- le premier élément de carrosserie est flexible autour d'une direction verticale en considérant l'assemblage agencé sur le véhicule automobile ;
- chaque extrémité latérale porte des moyens de fixation sur le véhicule automobile ;
- les ailes du véhicule automobile étant éloignées l'une de l'autre d'une distance donnée, l'assemblage s'étend, avant montage, sur une longueur supérieure à la distance entre les ailes du véhicule automobile ;
- au moins un des éléments de carrosserie porte un élément d'optiques ;
- au moins un des éléments de carrosserie comporte un vitrage d'optique. Cet élément latéral est éventuellement relié aux éléments techniques d'optique par un joint ;
- l'assemblage comporte deux éléments latéraux portant chacun des moyens de fixation sur le véhicule automobile, et un élément central susceptible de coulisser par rapport à chacun des éléments latéraux ;
- l'assemblage constitue une peau de pare-chocs ;
- l'assemblage est destiné à jouxter un capot avant de véhicule automobile.

On prévoit également un procédé de montage d'un assemblage d'éléments de carrosserie selon l'invention, dans lequel:
- on fixe deux extrémités latérales de l'assemblage sur le véhicule automobile,
- on fait coulisser les éléments de l'assemblage les uns par rapport aux autres jusqu'à une position dans laquelle l'assemblage et la pièce de carosserie du véhicule automobile sont convenablement mis en référence,
- on verrouille les éléments de l'assemblage dans cette position afin qu'ils ne coulissent plus entre eux.

De manière optionnelle, avant de fixer les extrémités latérales de l'assemblage sur le véhicule automobile, on positionne ces extrémités en les mettant en référence par rapport aux ailes du véhicule automobile.

### Description d'un exemple

Un exemple d'assemblage d'éléments de carrosserie selon l'invention est illustré par les figures schématiques 1 à 4 qui ne présentent aucun caractère limitatif de la portée de l'invention.

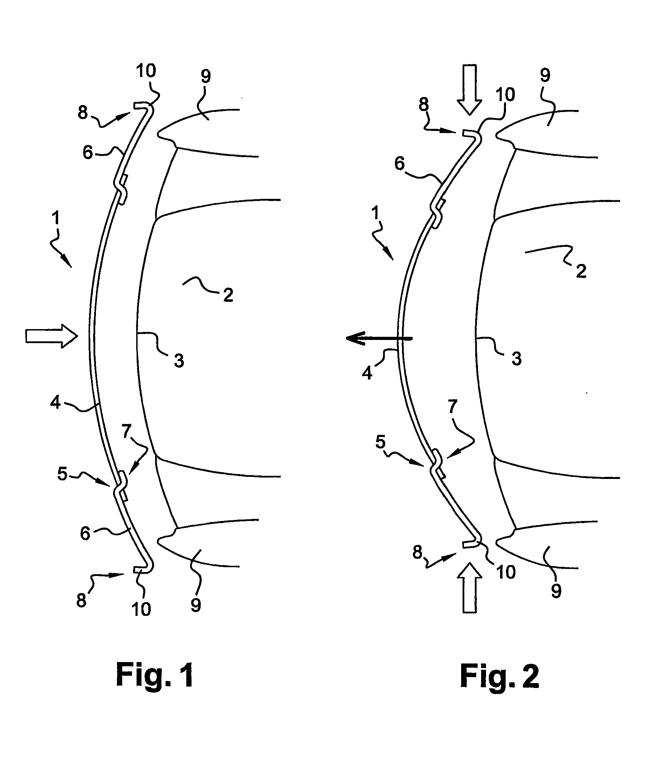

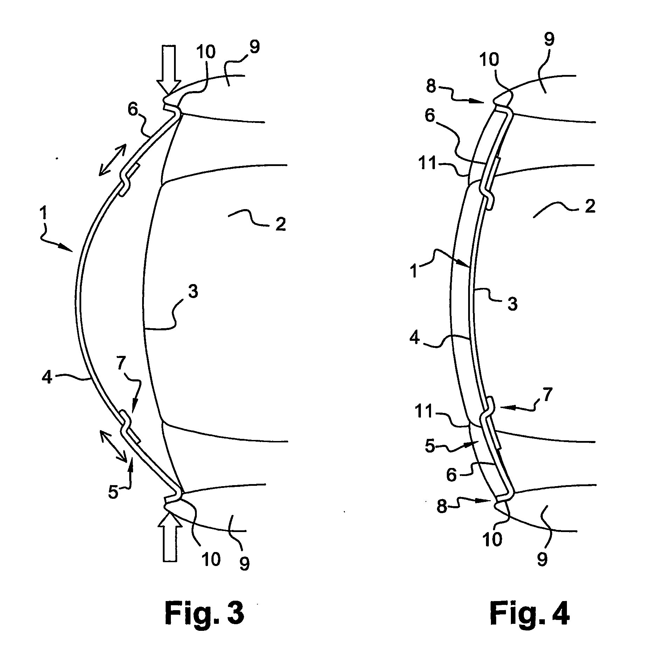

Les figures 1 à 4 sont des vues de dessus d'un assemblage d'éléments de carrosserie selon l'invention lors d'étapes successives du procédé de montage de l'assemblage sur le véhicule automobile.

| | | |
|---|---|---|
| Vocabulaire général | Désignation dans l'exemple | Référence sur les dessins |
| Assemblage d'éléments de carrosserie | Peau de pare-chocs | 1 |
| Pièce de carrosserie | Capot avant de véhicule automobile | 2 |
| Bord de raccordement | Bord de raccordement | 3 |
| Premier élément de carrosserie | Elément central | 4 |
| Premier organe de glissière | Premier organe de glissière | 5 |
| Second élément de carrosserie | Elément latéral | 6 |
| Second organe de glissière | Second organe de glissière | 7 |
| Extrémités latérales | Extrémités latérales | 8 |
| Ailes du véhicule automobile | Ailes du véhicule automobile | 9 |
| Moyens de fixation sur le véhicule automobile | Moyens de fixation sur le véhicule automobile | 10 |
| Elément d'optique | Elément d'optique | 11 |

### Détails des exemples

| Référence | Explication |
|---|---|
| 1 | L'assemblage d'éléments de carrosserie forme une peau de pare-chocs |
| 2 | Le capot avant du véhicule automobile présente un bord de raccordement 3 avec l'assemblage 1 de forme courbe |
| 3 | Le bord de raccordement entre l'assemblage 1 et le capot 2 est de forme courbe. L'assemblage 1 doit s'adapter à cette forme courbe. |
| 4 | L'élément central de l'assemblage 1 est flexible de |

| | |
|---|---|
| | manière à s'adapter au mieux à la forme courbe du bord de raccordement 3 |
| 5 | Les deux premiers organes de glissière sont destinés à coopérer avec deux seconds organes de glissière 7 respectifs, afin que l'élément central 4 coulisse par rapport aux éléments latéraux 6 |
| 6 | Les deux éléments latéraux portent chacun des moyens de fixation 10 sur le véhicule automobile et des moyens de mise en référence (non représentés) avec les ailes 9 du véhicule automobile |
| 7 | Il existe des moyens de verrouillage (non représentés) destinés à s'opposer, lorsqu'ils sont activés, au coulissement des organes de glissière les uns par rapport aux autres. |
| 10 | Des moyens de fixation de l'assemblage 1 sur le véhicule automobile, portés par les éléments latéraux 6 |
| 11 | Des éléments d'optiques, portés par les éléments latéraux 6 |

### Explications générales

La figure 1 représente l'assemblage 1 avant montage. On remarque que la longueur de cet assemblage 1 est supérieure à la distance séparant les ailes 9 du véhicule automobile. Ainsi, il est possible de faire fléchir l'assemblage 1 pour l'adapter à la forme du bord de raccordement 3.

Sur la figure 2, on fait fléchir l'élément central 4 de manière à ce que la distance entre les extrémités latérales 8 soit la même que la distance entre les ailes 9. Ainsi, on peut fixer ces extrémités latérales 8 sur le véhicule automobile, à proximité des ailes 9. De préférence, on met en référence les extrémités latérales 8 avec les ailes 9, grâce à des moyens de mise en référence non représentés.

Sur la figure 3, on fait coulisser l'élément central 4 par rapport aux éléments latéraux 6 jusqu'à obtenir, sur la figure 4, une position dans laquelle l'assemblage 1 et le capot 2 sont convenablement mis en référence.

Lorsque les éléments 4, 6 de l'assemblage 1 sont dans cette position, on les verrouille dans cette position grâce aux moyens de verrouillage.

Ainsi, l'assemblage 1 jouxte de manière satisfaisante toutes les pièces de carrosserie (ailes, capot) à proximité. Généralisations ou alternatives envisagées

L'assemblage pourrait comporter n'importe quel nombre d'éléments coulissant les uns par rapport aux autres, ce nombre d'éléments étant au moins égal à deux.

Par ailleurs, l'assemblage peut former un élément de carrosserie différent d'une peau de pare-chocs.

## Revendications

1. Assemblage (1) d'éléments de carrosserie de véhicule automobile, destiné à jouxter une pièce de carrosserie (2) présentant un bord de raccordement (3), de forme courbe, avec ledit assemblage (1), ledit assemblage comportant au moins un premier élément de carrosserie (4) portant un premier organe de glissière (5), et un second élément de carrosserie (6) portant un second organe de glissière (7) coopérant avec le premier organe de glissière (5) de manière que les premier (4) et second (6) éléments de carrosserie sont susceptibles de coulisser l'un par rapport à l'autre en s'adaptant à la forme courbe du bord de raccordement (3) de la pièce de carrosserie (2).

2. Assemblage (1) d'éléments de carrosserie selon la revendication 1, comportant des moyens de verrouillage des éléments de carrosserie (4, 6) entre eux, destinés à s'opposer, lorsqu'ils sont activés, au coulissement de ces éléments de carrosserie (4, 6) les uns par rapport aux autres.

3. Assemblage (1) d'éléments de carrosserie selon la revendication 1 ou 2, s'étendant entre deux extrémités latérales (8) destinées chacune à être agencée à proximité d'une aile (9) respective du véhicule automobile.

4. Assemblage (1) d'éléments de carrosserie selon la revendication 3, dans lequel chaque extrémité latérale (8) de l'assemblage comporte des moyens de mise en référence par rapport à l'aile (9) correspondante du véhicule automobile.

5. Assemblage (1) d'éléments de carrosserie selon l'une quelconque des revendications précédentes, dans lequel le premier élément de carrosserie (4) est flexible autour d'une direction verticale en considérant l'assemblage (1) agencé sur le véhicule automobile.

6. Assemblage (1) d'éléments de carrosserie selon l'une quelconque des revendications 3 à 5, dans lequel chaque extrémité latérale (8) porte des moyens de fixation (10) sur le véhicule automobile.

7. Assemblage (1) d'éléments de carrosserie selon l'une quelconque des revendications 3 à 6, dans lequel, les ailes (9) du véhicule automobile étant éloignées l'une de l'autre d'une distance donnée, l'assemblage (1) s'étend, avant montage, sur une longueur supérieure à la distance entre les ailes (9) du véhicule automobile.

8. Assemblage (1) d'éléments de carrosserie selon l'une quelconque des revendications 1 à 7, dans lequel au moins un des éléments de carrosserie (4, 6) porte un élément d'optique (11).

9. Assemblage (1) d'éléments de carrosserie selon l'une quelconque des revendications 1 à 7, dans lequel au moins un des éléments de carrosserie (4, 6) comporte un vitrage d'optique.

10. Assemblage (1) d'éléments de carrosserie selon l'une quelconque des revendications précédentes, comportant deux éléments latéraux (6) portant chacun des moyens de fixation (10) sur le véhicule automobile, et un élément central (4) susceptible de coulisser par rapport à chacun des éléments latéraux (6).

11. Assemblage (1) d'éléments de carrosserie selon l'une quelconque des revendications précédentes, constituant une peau de pare-chocs.

12. Assemblage (1) d'éléments de carrosserie selon l'une quelconque des revendications précédentes, destiné à jouxter un capot avant (2) de véhicule automobile.

13. Procédé de montage d'un assemblage (1) d'éléments de carrosserie selon l'une quelconque des revendications 1 à 12, dans lequel:
- on fixe deux extrémités latérales (8) de l'assemblage (1) sur le véhicule automobile,
- on fait coulisser les éléments de l'assemblage (1) les uns par rapport aux autres jusqu'à une position dans laquelle l'assemblage (1) et la pièce de carrosserie (2) du véhicule automobile sont convenablement mis en référence,
- on verrouille les éléments de l'assemblage (1) dans cette position afin qu'ils ne coulissent plus entre eux.

14. Procédé de montage selon la revendication 13, dans lequel, avant de fixer les extrémités latérales (8) de l'assemblage (1) sur le véhicule automobile, on positionne ces extrémités latérales (8) en les mettant en référence par rapport aux ailes (9) du véhicule automobile.

## Claims

1. An assembly (1) of motor vehicle bodywork elements for juxtaposing with a bodywork part (2) that presents a connection edge (3) with said assembly (1), the connection edge being curved in shape, wherein the assembly comprises at least a first bodywork element (4) carrying a first slider member (5), and a second bodywork element (6) carrying a second slider member (7) cooperating with the first slider member (5) in such a manner that the first (4) and second (6) bodywork elements are capable of sliding relative to each other while adapting to the curved shape of the connection edge (3) of the bodywork part (2).

2. A bodywork element assembly (1) according to claim 1, including locking means for locking the bodywork elements (4, 6) together, the locking means serving, when activated, to oppose the sliding of said bodywork elements (4, 6) relative to each other.

3. A bodywork element assembly (1) according to claim 1 or 2, the assembly extending between two lateral ends (8), each designed to be disposed close to a respective fender (9) of the motor vehicle.

4. A bodywork element assembly (1) according to claim 3, wherein each side end (8) of the assembly includes means for positioning the assembly relative to the corresponding fender (9) of the motor vehicle.

5. A bodywork element assembly (1) according to any one of preceding claims, wherein the first bodywork element (4) is flexible about a direction that is vertical when considering the assembly (1) in position on the motor vehicle.

6. A bodywork element assembly (1) according to any one of claims 3 to 5, wherein each side end (8) carries fastener means (10) for fastening to the motor vehicle.

7. A bodywork element assembly (1) according to any one of claims 3 to 6, wherein, for motor vehicle fenders (9) spaced apart from each other by a given distance, the assembly (1) prior to mounting extends over a length that is greater than the distance between the motor vehicle fenders (9).

8. A bodywork element assembly (1) according to any one of claims 1 to 7, wherein at least one of the bodywork elements (4, 6) carries a light unit (11).

9. A bodywork element assembly (1) according to any one of claims 1 to 7, wherein at least one of the bodywork elements (4, 6) comprises a glass for a light.

10. A bodywork element assembly (1) according to any one of preceding claims, the assembly having two side elements (6), each side element carrying fastener means (10) for fastening to the motor vehicle, and the assembly having a central element (4) suitable for sliding relative to each of the side elements (6).

11. A bodywork element assembly (1) according to any one of preceding claims, the assembly comprising a bumper skin.

12. A bodywork element assembly (1) according to any one of preceding claims, for juxtaposing with a front hood (2) of a motor vehicle.

13. A method of mounting a bodywork element assembly (1) according to any one of claims 1 to 12, the method comprising the following steps:
· fastening two side elements (8) of the assembly (1) to the motor vehicle;
· causing the elements of the assembly (1) to slide relative to one another into a position in which the assembly (1) and the bodywork part (2) of the motor vehicle are suitably positioned relative to each other; and
• · locking the elements of the assembly (1) in said position so that they no longer slide relative to one another.

14. A mounting method according to claim 13, wherein, prior to fastening the side ends (8) of the assembly (1) on the motor vehicle, the side ends (8) are positioned by being put into position relative to the fenders (9) of the motor vehicle.

## Patentansprüche

1. Baugruppe (1) aus Karosserieelementen eines Kraftfahrzeugs, dazu bestimmt, ein Teil der Karosserie (2) mit einem Verbindungsrand (3) in Kurvenform mit der Baugruppe in Angrenzung zu bringen (1), wobei die Baugruppe wenigstens ein erstes Karosserieelement (4) umfasst, das eine erste Führungsschienenvorrichtung (5) aufweist, und ein zweites Karosserieelement (6) umfasst, das eine zweite Führungsschienenvorrichtung (7) aufweist, die mit der ersten Führungsschienenvorrichtung (5) so zusammenwirkt, dass das erste (4) und zweite (6) Karosserieelement sich gegeneinander verschieben können und dabei an die Kurvenform des Verbindungsrands (3) des Karosserieteils (2) anpassen.

2. Baugruppe (1) aus Karosserieelementen nach Anspruch 1, umfassend Mittel zur Verriegelung der Karosserieelemente (4, 6) untereinander, dazu bestimmt, dass sie im aktiven Zustand dem Verschieben dieser Karosserieelemente (4, 6) gegeneinander entgegenwirken.

3. Baugruppe (1) aus Karosserieelementen nach Anspruch 1 oder 2, die sich zwischen zwei seitlichen Enden (8) erstreckt, jeweils dazu bestimmt, in der Nähe eines jeweiligen Kotflügels (9) des Kraftfahrzeugs angeordnet zu werden.

4. Baugruppe (1) aus Karosserieelementen nach Anspruch 3, bei der jedes seitliche Ende (8) der Baugruppe Mittel zum Ausrichten am entsprechenden Kotflügel (9) des Kraftfahrzeugs umfasst.

5. Baugruppe (1) aus Karosserieelementen nach einem der vorhergehenden Ansprüche, bei der das erste Karosserieelement (4) unter Berücksichtigung der am Kraftfahrzeug angeordneten Baugruppe (1) um eine vertikale Richtung flexibel ist.

6. Baugruppe (1) aus Karosserieelementen nach einem der Ansprüche 3 bis 5, bei der jedes seitliche Ende (8) Mittel zur Befestigung (10) am Kraftfahrzeug aufweist.

7. Baugruppe (1) aus Karosserieelementen nach einem der Ansprüche 3 bis 6, bei der sich die Baugruppe (1) vor der Montage über eine Länge erstreckt, die größer ist als der Abstand zwischen den Kotflügeln (9) des Kraftfahrzeugs, wobei die Kotflügel (9) des Kraftfahrzeugs einen bestimmten Abstand zueinander aufweisen.

8. Baugruppe (1) aus Karosserieelementen nach einem der Ansprüche 1 bis 7, bei der wenigstens eines der Karosserieelemente (4, 6) ein Optikelement (11) aufweist.

9. Baugruppe (1) aus Karosserieelementen nach einem der Ansprüche 1 bis 7, bei der wenigstens eines der Karosserieelemente (4, 6) ein Optikglas aufweist.

10. Baugruppe (1) aus Karosserieelementen nach einem der vorhergehenden Ansprüche, umfassend zwei seitliche Elemente (6), die jeweils Mittel zur Befestigung (10) am Kraftfahrzeug aufweisen, und ein Zentralelement (4), das sich zu jedem der seitlichen Elemente (6) verschieben kann.

11. Baugruppe (1) aus Karosserieelementen nach einem der vorhergehenden Ansprüche, die eine Stoßfängerhaut darstellt.

12. Baugruppe (1) aus Karosserieelementen nach einem der vorhergehenden Ansprüche, dazu bestimmt, an eine Motorhaube (2) des Kraftfahrzeugs anzugrenzen.

13. Verfahren für die Montage einer Baugruppe (1) aus Karosserieelementen nach einem der Ansprüche 1 bis 12, bei dem:
- zwei seitliche Enden (8) der Baugruppe (1) am Kraftfahrzeug befestigt werden,
- die Elemente der Baugruppe (1) gegeneinander in eine Position verschoben werden, in der die Baugruppe (1) und das Karosserieteil (2) des Kraftfahrzeugs entsprechend ausgerichtet sind,
- die Elemente der Baugruppe (1) in dieser Position verriegelt werden, damit sie sich nicht mehr gegeneinander verschieben.

14. Montageverfahren nach Anspruch 13, bei dem vor dem Befestigen der seitlichen Enden (8) der Baugruppe (1) am Kraftfahrzeug diese seitlichen Enden (8) positioniert werden, indem diese zu den Kotflügeln (9) des Kraftfahrzeugs ausgerichtet werden.
